# EUROPÄISCHE PATENTSCHRIFT

(11) **EP 0 543 138 B1**
(45) Veröffentlichungstag und Bekanntmachung des Hinweises auf die Patenterteilung: **26.06.1996**
(21) Anmeldenummer: 92117453.8
(22) Anmeldetag: 13.10.1992
(51) Int. Cl.: B28D 1/08, B28D 1/30, B23D 57/00

(54) **Konturen-Seilsäge für Steine oder dgl. Werkstücke**
Wire saw for cutting contours in stones or similar workpieces
Scie à fil pour couper des pierres ou pièces similaires selon des contours

(30) Priorität: 19.11.1991 DE 4138106
(43) Veröffentlichungstag der Anmeldung: 26.05.1993
(73) Patentinhaber: Mayer, Wolfgang, A-5020 Salzburg (AT)
(72) Erfinder: Mayer, Wolfgang, A-5020 Salzburg (AT)
(74) Vertreter: Haft, von Puttkamer, Berngruber, Czybulka

(56) Entgegenhaltungen:
- DE-A- 2 542 125
- US-A- 2 866 448
- US-A- 3 158 146

## Beschreibung

Die Erfindung bezieht sich auf eine Konturen-Seilsäge für Steine oder dgl. Werkstücke nach dem Oberbegriff des Anspruchs 1.

Eine derartige Konturen-Seilsäge ist aus DE-A-25 42 125 bekannt. Sie ist zum Zertrennen von Blöcken aus geschäumtem Kunststoff bestimmt. Bei der bekannte Säge ist der Rahmen im mittleren Bereich zwischen den beiden Umlenkrollen mit dem schneidenden Seiltrum und der dritten Umlenkrolle an dem Traggestell verschwenkbar gelagert. Das Traggestell weist einen Laufrahmen auf, der zur Längsverschiebung auf Führungsstäben gelagert ist. Wenn der Rahmen verschwenkt wird, bewegt sich das schneidende Seiltrum auf einer Kreisbahn. Ein vertikaler Schnitt ist daher nur möglich, wenn zugleich der Laufrahmen entsprechend verschoben wird. Dazu ist bei der bekannten Säge eine Schablone vorgesehen. Die bekannte Säge erfordert daher schon beim Schneiden von Schaumstoffblöcken eine sorgfältige Bedienung. Ein exakter vertikaler Schnitt durch einen Stein ist praktisch unmöglich.

Ferner sind Konturen-Seilsägen bekannt, bei denen die Schwenkachsen der beiden Umlenkrollen, zwischen denen das schneidende Seiltrum verläuft, waagrecht und parallel zur Schieberichtung eines Schlittens ausgerichtet sind, mit dem das Werkstück zugeführt wird (US-A-3 158 146).

Diese Säge hat sich zwar im großen und ganzen bewährt, jedoch ist ihr Raumbedarf erheblich.

Aufgabe der Erfindung ist es, eine Konturen-Seilsäge für Steine oder dgl. Werkstücke mit geringem Raumbedarf bereitzustellen, bei der auch in vertikaler Richtung ein exakter Schnitt problemlos möglich ist.

Dies wird erfindungsgemäß mit der im Anspruch 1 gekennzeichneten Konturen-Seilsäge erreicht. In den Unteransprüchen sind vorteilhafte Ausgestaltungen der Erfindung wiedergegeben.

Nachstehend ist eine Ausführungsform der erfindungsgemäßen Konturen-Seilsäge anhand der Zeichnung näher erläutert. Darin zeigen:
- Fig. 1: eine perspektivische Ansicht der Konturen-Seilsäge;
- Fig. 2 und 3: stark schematisiert eine Seitenansicht bzw. eine Draufsicht der Säge nach Fig. 1 ohne Verkleidung und andere Einzelheiten; und
- Fig. 4: Einzelheiten der Anlenkung des Rahmens am Tragegestell in perspektivischer Wiedergabe.

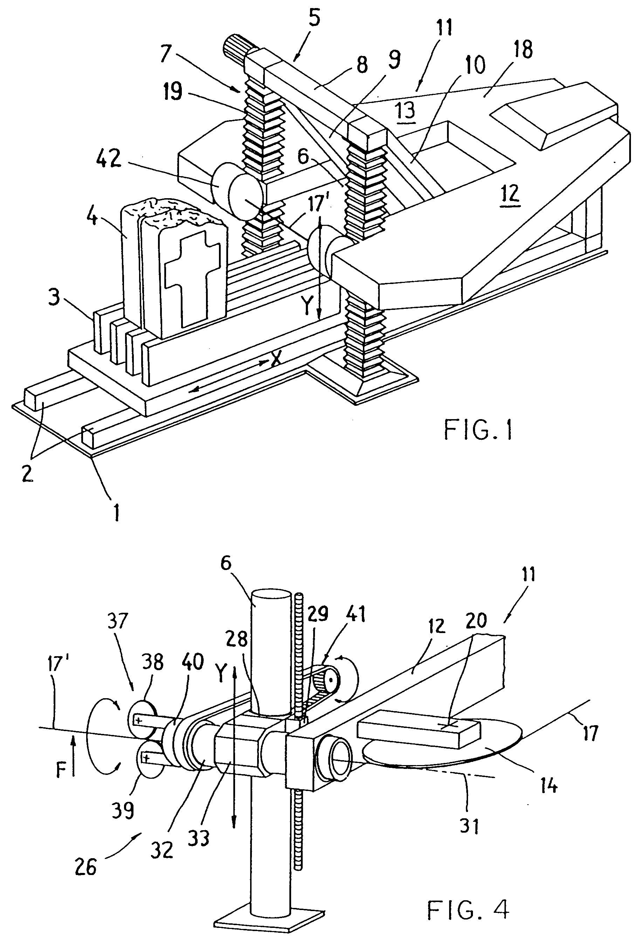

Gemäß Fig. 1 weist die Konturen-Seilsäge ein Grundgestell 1 auf, das mit Führungsschienen 2 versehen ist, auf denen ein in x-Richtung verschiebbarer Schlitten 3 gelagert ist, der das Werkstück 4 trägt, das mit einer bestimmten Kontur versehen werden soll.

Über dem Grundgestell 1 ist ein portalartiges Tragegestell 5 mit zwei Säulen 6, 7 angeordnet, auf denen ein Quersteg 8 ruht. Über schräg verlaufende Stützstreben 9, 10 stützt sich das Tragegestell 5 zusätzlich am Grundgestell 1 ab.

Weiterhin ist ein liegend angeordneter Rahmen 11 vorgesehen, der gabelförmig ausgebildet ist, wobei sich die Enden der beiden Schenkel 12, 13 des gabelförmigen Rahmens 11 zu der einen bzw. anderen Säule 6, 7 des Tragegestells 5 erstrecken und an diesem in y-Richtung, also vertikal bewegbar, gelagert sind.

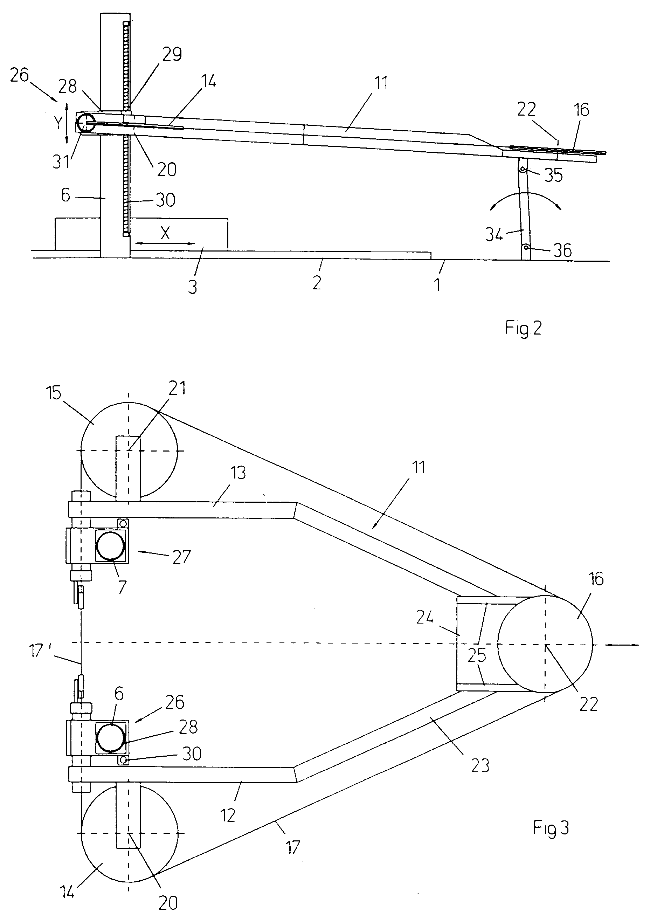

An dem Rahmen 11 sind drei liegend angeordnete Umlenkrollen 14, 15 und 16 drehbar gelagert, um die ein endloses Seil 17 umläuft.(Fig. 2 bis 4). Zwei Umlenkrollen 14, 15 sind an den dem Traggestell 5 zugewandten Enden der beiden Schenkel 12, 13 des Rahmens 11 angeordnet. Zwischen ihnen verläuft das in das Werkstück 4 eintretende Seiltrum 17', und zwar waagrecht und senkrecht zur Schieberichtung x des Schlittens 3.

Der gabelförmige Rahmen 11 ist in Fig. 1 mit einer Verkleidung 18 versehen; desgleichen sind in Fig. 1 die Portalsäulen 6, 7 jeweils mit einem Faltenbalg 19 verkleidet, der an der Oberseite bzw. Unterseite der Verkleidung 18 des Rahmens 11 befestigt ist.

Gemäß Fig. 2 weisen die Umlenkrollen oder -räder 14 bis 16 im wesentlichen vertikal verlaufende, sich von unten nach oben erstreckende Drehachsen 20 bis 22 auf, die parallel zueinander verlaufen. Die Umlenkrolle 16 ist an dem die beiden Schenkel 12, 13 verbindenden Abschnitt 23 des Rahmens 11, also in Schieberichtung x des Schlittens 3 im Abstand von dem Tragegestell 5 angeordnet.

Die Umlenkrolle 16 ist als Spannrolle für das Seil 17 ausgebildet. Sie ist dazu auf einem Spannschlitten 24 befestigt, der an einer am Verbindungsabschnitt 23 angeordneten Führung 25 in Schieberichtung x des Schlittens 3 mit einer nicht dargestellten Betätigungsvorrichtung verschiebbar ist, beispielsweise pneumatisch oder hydraulisch.

Statt der einen Umlenkrolle 16 im Abstand von dem Tragegestell 5 am Verbindungsabschnitt 23 können dort auch zwei oder mehrere Umlenkrollen am Rahmen 11 vorgesehen sein. Eine der Umlenkrollen 14 bis 16 wird durch einen nicht dargestellten Motor angetrieben.

Die beiden Enden der Schenkel 12, 13 des Rahmens 11 und damit die beiden dem Tragegestell 5 benachbarten Umlenkrollen 14, 15 sind mittels Führungen 26, 27 an den Säulen 6, 7 des Tragegestells 5 vertikal bewegbar gelagert. Die Führungen 26, 27 sind gleich ausgebildet, so daß es ausreicht, die Führung 26 näher zu erläutern. Gemäß Fig. 2 besteht die Führung 26 aus einer entlang der Säule 6 verschiebbaren Hülse 28, die durch ein Schraubengetriebe entlang der Säule 6 auf- und abbewegbar ist. D. h., an der Hülse 28 ist eine Mutter 29 befestigt, in die eine sich entlang der Säule 6 erstreckende Gewindespindel 30 eingreift, die von einem nicht dargestellten Motor angetrieben wird. Die beiden Führungen 26, 27 werden dabei synchron bewegt.

Die beiden Enden der Schenkel 12, 13 des Rahmens 11 sind an den Führungen 26, 27 um eine waagrechte Achse 31 verschwenkbar angelenkt. Gemäß Fig. 4 ist dazu ein Querrohrstück 32 an der Hülse 28 jeder Führung 26, 27 beispielsweise mit einer Lasche 33 befestigt. An dem Querrohrstück 32 ist der betreffende Schenkel 12, 13 des Rahmens 11 drehbar gelagert. Durch die Längsachse des Querrohrstücks 32 verläuft das Seiltrum 17', d. h. die Schwenkachse 31 des Rahmens 11 an den Führungen 26, 27 an den Säulen 6, 7 des Tragegestells 5 und die Seilachse des zwischen den beiden Umlenkrollen 14, 15 verlaufenden, schneidenden Seiltrums 17' fallen zusammen. Damit ist gewährleistet, daß das Seiltrum 17' um eine gleich große Strecke wie die Hülse 28 bewegt wird.

An seinem vom Tragegestell 5 abgewandten Ende, also im Bereich des Verbindungsabschnitts 23, ist der Rahmen 11 mit einer Schwinge 34 versehen. Die Schwinge 34 ist einerseits am Rahmen 11 und andererseits am Grundgestell 1 um eine Achse 35 bzw. 36 verschwenkbar angelenkt. Die Schwenkachsen 35 und 36 der Schwinge 34 verlaufen parallel zur Drehachse 31.

Wenn das schneidende Seiltrum 17' in das Werkstück 4 sägt, wirkt der in Fig. 4 durch den Pfeil F dargetellte Schnittdruck auf das Seiltrum 17'. Um diesen Schnittdruck aufzunehmen, ist an dem inneren Ende der beiden Querrohrstücke 32 jeweils eine Seilführung 37 vorgesehen. Die Seilführung 37 besteht aus einer den Schnittdruck aufnehmenden Seilführungsrolle 38 und einer auf die Seilführungsrolle 38 zu starren oder federbelasteten Gegenrolle 39. Die beiden Rollen 38, 39 sind an einem Ring 40 befestigt, der um die Schwenkachse 31 drehbar am Querrohrstück 32 gelagert und über einen Zahnriemen- oder sonstigen Antrieb 41 so drehbar ist, daß die Seilführungsrolle 38 genau gegen den Schnittdruck F ausgerichtet ist. Um den Radfutterverschleiß berücksichtigen zu können, ist die Seilführungsrolle 38 zum Seiltrum 17' hin verstellbar ausgebildet. Die Seilführung 37 ist in einem Gehäuse 42 angeordnet (Fig. 1).

Durch eine nicht dargestellte elektronische Steuerung werden die x, y-Koordinaten für die gewünschten Umrisse des Werkstücks 4 in entsprechende Bewegungen des Schlittens 3 und des Rahmens 11 umgesetzt, so daß das Werkstück 4 exakt die gewünschte Form erhält. Dazu wird bevorzugt eine elektronische Steuervorrichtung verwendet, die eine numerische Programmierung der Daten in der x, y-Richtung ermöglicht.

Die Seilführungsrollen 38, 39 werden durch eine Tangentialsteuerung der Kontur nachgeführt, und zwar so, daß die Seilführungsrollen 38, 39 entgegen dem Schneiddruck F wirken und diese abstützen.

Die Seilführungsrollen 38, 39 sind durch eine Verstellung um den Verschleiß der Seilführungsnut zustellbar angeordnet, um das Seil 17 exakt in der Schwenkachse 31 zu halten.

## Patentansprüche

1. Konturenseilsäge für Steine oder dergleichen Werkstücke (4) mit einem endlos umlaufenden Seil (17) mit einem waagrecht schneidenden Seiltrum (17') zwischen zwei Umlenkrollen (14, 15), die an einem Rahmen (11) mit sich von unten nach oben erstreckenden Drehachsen (20, 21, 22) drehbar gelagert sind, wobei der Rahmen (11) an einem Traggestell (5) um eine waagrechte Achse (31) verschwenkbar angelenkt ist, und wobei der Rahmen von Traggestell in einer waagerechten Vorschubrichtung beabstandet mindestens eine weitere Umlenkrolle mit sich von unten nach oben erstreckender Drehachse aufweist, dadurch gekennzeichnet, daß ein waagrecht und zum schneidenden Seiltrum (17') senkrecht verschiebbar gelagerter Schlitten (3) zur Zuführung des Werkstücks (4) vorgesehen ist, der Rahmen (11) an dem Traggestell (5) mittels Führungen (26, 27) vertikal bewegbar gelagert ist, und die waagrechte Achse (31) mit der der Rahmen (11) an den Führungen (26, 27) verschwenkbar angelenkt ist, mit der Seilachse des schneidenden Seiltrums (17') zusammenfällt.

2. Säge nach Anspruch 1, dadurch gekennzeichnet, daß der Rahmen (11) sich über eine im Abstand von den Führungen (26, 27) angeordnete Schwinge (34) mit zur Schwenkachse (31) des Rahmens (11) parallelen Drehachsen (35, 36) an einem Grundgestell (1) abstützt.

3. Säge nach Anspruch 2 oder 3, dadurch gekennzeichnet, daß die Schwenkachse (31) des Rahmens (11) durch an den Führungen (26, 27) befestigte Querrohrstücke (32) gebildet wird, durch die das Seil (17) hindurchläuft, wobei an den einander zugewandten Enden der Querrohrstücke (32) jeweils eine um die Schwenkachse (31) drehbare Seilführung (37) zur Aufnahme des Schnittdrucks angeordnet ist.

4. Säge nach einem der vorstehenden Ansprüche, dadurch gekennzeichnet, daß die im Abstand von dem Tragegestell (5) angeordnete Umlenkrolle (16) als in Schieberichtung (x) des Schlittens (3) verschiebbare Spannrolle ausgebildet ist.

## Claims

1. A contour wire saw for stones or similar workpieces (4) having an endlessly circulating wire (17) with a horizontal cutting strand (17') between two deflecting rolls (14, 15) rotatably mounted on a frame (11) with rotation axes (20, 21, 22) extending from bottom to top, the frame (11) being pivoted to a supporting structure (5) around a horizontal axis (31), and the frame having spaced from the supporting structure in a horizontal feed direction at least one further deflecting roll with a rotation axis extending from bottom to top, characterized in that a slide (3) mounted so as to move horizontally and perpendicular to the cutting strand (17') is provided for feeding the workpiece (4), the frame (11) is mounted so as to move vertically on the supporting structure (5) by means of guides (26, 27), and the horizontal axis (31) with which the frame (11) is pivoted to the guides (26, 27) coincides with the wire axis of the cutting strand (17').

2. The saw of claim 1, characterized in that the frame (11) is supported on a base (1) via a rocker (34) spaced from the guides (26, 27) with rotation axes (35, 36) parallel to the swiveling axis (31) of the frame (11).

3. The saw of claim 2 or 3, characterized in that the swiveling axis (31) of the frame (11) is formed by cross tube pieces (32) fastened to the guides (26, 27), the wire (17) running through said cross tube pieces, a wire guide (37) rotatable around the swiveling axis (31) being disposed on the opposing ends of the cross tube pieces (32) in each case for taking up the cutting pressure.

4. The saw of any of the above claims, characterized in that the deflecting roll (16) spaced from the supporting structure (5) is formed as a tension roll slidable in the sliding direction (x) of the slide (3).

## Revendications

1. Scie à fil pour couper des pierres ou des pièces à usiner similaires (4) selon des contours, comportant un fil (17) circulant en continu avec un brin de fil (17') coupant à l'horizontale entre deux poulies de guidage (14, 15) qui sont montées en rotation sur un bâti (11) et dont les axes de rotation (20, 21, 22) s'étendent de bas en haut, le bâti (11) étant articulé à pivotement sur un cadre porteur (5) autour d'un axe horizontal (31), et le bâti, à distance du cadre porteur dans une direction d'avancement horizontal, présentant au moins une autre poulie de guidage dont l'axe de rotation s'étend de bas en haut, caractérisée en ce qu'il est prévu un chariot (3) monté à déplacement horizontal et vertical par rapport au brin de fil (17') coupant pour amener la pièce à usiner, en ce que le bâti (11) est monté à déplacement vertical sur le cadre porteur (5) au moyen de guidages (26, 27), et en ce que l'axe horizontal (31), par lequel le bâti (11) est articulé à pivotement sur les guidages (26, 27), coïncide avec l'axe du fil du brin de fil coupant (17').

2. Scie selon la revendication 1, caractérisée en ce que le bâti prend appui sur un châssis de base (1) par l'intermédiaire d'une coulisse (34) agencée à distance des guidages (26, 27) avec des axes de rotation (35, 36) parallèles à l'axe de pivotement (31) du bâti (11).

3. Scie selon l'une ou l'autre des revendications 2 et 3, caractérisée en ce que l'axe de pivotement (31) du bâti (11) est formé par des segments de tubes transversaux (32) fixés sur les guidages (26, 27), à travers lesquels passe le fil (17), un guidage de fil (37) rotatif autour de l'axe pivotant (31), destiné à recevoir la pression de coupe, étant agencé sur chacune des extrémités tournées l'une vers l'autre des segments de tubes transversaux (32).

4. Scie selon l'une quelconque des revendications précédentes, caractérisée en ce que la poule de guidage (16) agencée à distance du cadre porteur (5) est réalisée sous la forme d'un galet-tendeur déplaçable en direction d'avancement (x) du chariot (3).
